Europäisches Patentamt

European Patent Office

Office européen des brevets

(11) Publication number: **0 396 791 B1**

## EUROPEAN PATENT SPECIFICATION

(12)

(45) Date of publication of patent specification: **27.04.94** (51) Int. Cl.⁵: **H05B 39/04**, G05F 1/565, G05F 1/46

(21) Application number: **89108295.0**

(22) Date of filing: **09.05.89**

(54) **Procedure and apparatus for the regulation of voltage in a flasher.**

(43) Date of publication of application:
**14.11.90 Bulletin 90/46**

(45) Publication of the grant of the patent:
**27.04.94 Bulletin 94/17**

(84) Designated Contracting States:
**DE FR GB NL SE**

(56) References cited:
**DE-A- 1 613 663**
**DE-A- 2 801 385**

(73) Proprietor: **Oy Sabik AB**

**SF-07370 Pellinki(FI)**

(72) Inventor: **Sanmark, Krister**
**Punahilkantie 8 A 5**
**SF-00820 Helsinki(FI)**
Inventor: **Heikkinen, Eero**
**Jämeräntaival 5 C 364**
**SF-02150 Espoo(FI)**

(74) Representative: **Weitzel, Wolfgang, Dr.-Ing.**
**Patentanwalt**
**Friedenstrasse 10**
**D-89522 Heidenheim (DE)**

Rank Xerox (UK) Business Services
(3.10/3.09/3.3.3)

# Description

The present invention relates to a procedure and an apparatus for the regulation of voltage in a two-filament flasher.

Flashers are used e.g. in buoys and light beacons for the marking of navigation channels. It is important that the luminous power of the lamp in such a flasher should remain as constant as possible. However, especially when the lamp is located at a long distance from the battery or other voltage source, the voltage supplied to the lamp is often wrong due to the voltage drop occurring in the supply conductors. This voltage drop can be reduced by increasing the sectional area of the supply conductors. This entails the use of conductors that, in respect of their current carrying capacity, have an unduly large sectional area. This leads to extra costs.

The object of the present invention is to eliminate the drawbacks mentioned. The procedure of the invention for regulating the voltage in a flasher is characterized in that, for voltage regulation, the voltage between the terminals of the first filament of the flasher is determined by the aid of three conductors, the first of which is connected to one terminal of the first and second filaments, the second to the other terminal of the first filament and the third to the other terminal of the second filament, and that, whilst the first filament is illuminated and the second filament is extinguished, the voltage between the terminals of the first filament is determined by measuring the voltage in each of the three conductors at or near the remote end as seen from the filaments and then deducting from the voltage of the third conductor the sum of the voltages of the other two conductors.

Since the voltage is regulated on the basis of the voltage present at the terminals of the filament, the procedure ensures that the correct voltage is maintained between the terminals of the filament regardless of the length of the supply conductors.

A preferred embodiment of the procedure of the invention is characterized in that, after the voltage between the terminals of the first filament has been determined, said voltage value or a quantity deduced from it is stored in memory.

Another preferred embodiment of the procedure of the invention is characterized in that the filament is supervised by measuring the voltage at one or both of its terminals.

The apparatus designed for implementing the procedure of the invention for regulating the voltage in a two-filament flasher is characterized in that, to regulate the voltage in the flasher, the apparatus contains a microprocessor which, whilst the first filament is illuminated and the second filament is extinguished, determines the voltage between the terminals of the first filament by the aid of three conductors, the first of which is connected to one terminal of the first and second filaments, the second to the other terminal of the first filament and the third to the other terminal of the second filament, and that the microprocessor determines the voltage between the terminals of the first filament by measuring the voltage of each of the three conductors at or near the remote end as seen from the filaments and then deducting from the voltage of the third conductor the sum of the voltages of the other two conductors.

A preferred embodiment of the apparatus designed for implementing the procedure of the invention is characterized in that, after determining the voltage between the terminals of the first filament, the microprocessor stores said voltage value or a quantity deduced from it in memory.

Another preferred embodiment of the apparatus designed for implementing the procedure of the invention is characterized in that the microprocessor supervises the filament by measuring the voltage at at least one of its terminals.

In the following, the invention is described by the aid of an example, reference being made to the drawing attached, wherein:

Fig. 1 represents the apparatus for voltage regulation, a battery, the filaments and their supply conductors in a flasher.

Fig. 2 shows a circuit used in the regulation of the voltage.

Fig. 3 represents voltage pulses.

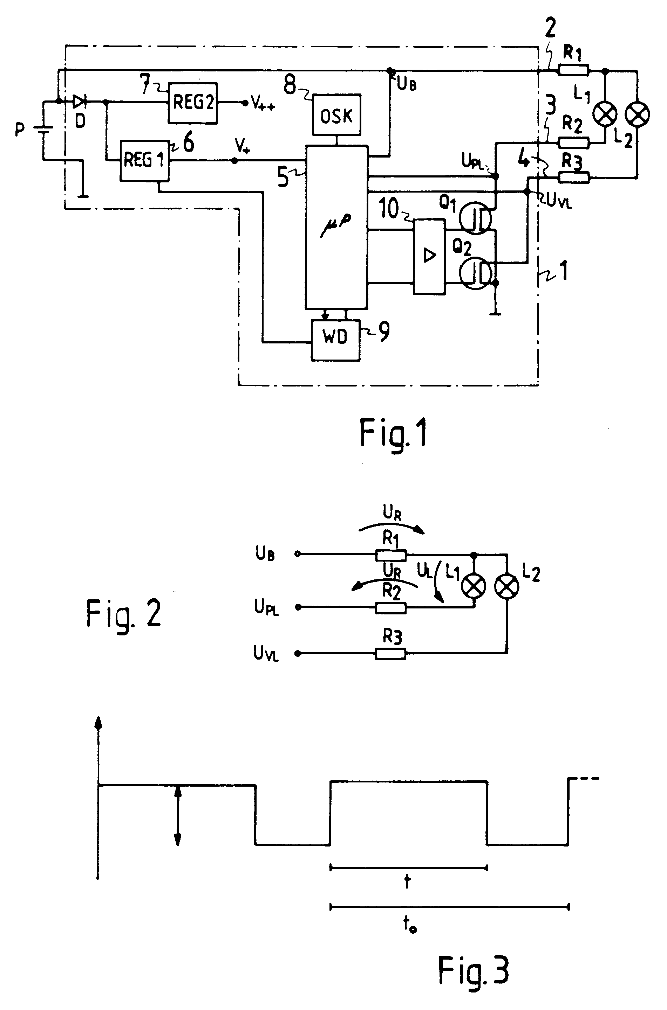

Fig. 1 shows an apparatus for voltage regulation, a battery, the filaments and their supply conductors e.g. in a flasher mounted on a buoy. The equipment in Fig. 1 includes a battery P supplying a d.c. voltage, a regulator unit 1, a lamp with two filaments $L_1$ and $L_2$, and three conductors 2 - 4 feeding the lamp. Each conductor has some resistance, represented by a resistor $R_1$, - $R_3$ in each conductor. The lamp used as the light source in the flasher has a voltage rating of e.g. 10.3 V and a power rating of e.g. 2 - 100 W. The lamp is separated from the regulator unit by a distance of e.g. several tens of meters. The battery has a voltage of e.g. 25 V and is placed close to the regulator unit. The regulator unit regulates a pulse shaped voltage obtained by chopping the d.c. voltage supplied by the battery P.

The regulator unit 1 uses a microprocessor ($\mu$P) 5, e.g. Motorola 68HC11, to control the operation of the flasher equipment. The processor 5 is fed by a voltage V + of 5 V, which is obtained from the battery via a diode D and a voltage regulator (REG1) 6, e.g. LP2951, which adjusts the voltage to the required level. Another regulator (REG2) 7, e.g. LP2950, which is also fed by the battery via the diode D, provides a voltage V + + of 10 V. The processor is controlled by an oscillator (OSK) 8, which may consist of a crystal placed inside the processor. The operation of the processor is supervised by a calibration circuit (WD) 9. In addition, the regulator unit incorporates (MOSFET) transistors $Q_1$ and $Q_2$, e.g. of the type BUZ 11, which are used as switches to chop the voltage obtained from the battery. The transistors $Q_1$ and $Q_2$, of which $Q_1$ is connected in series with the first filament $L_1$ and $Q_2$ with the second filament $L_2$, are controlled by the processor 5 in such manner that one of the filaments $L_1$, and $L_2$ is always illumined at the desired instant. Between the processor 5 and the transistors $Q_1$, and $Q_2$ is a digital buffer circuit 10, e.g. MC 14504, which is fed by the 10 V voltage obtained from the second regulator 7.

The voltage at the terminals of the lamp and at those of the filaments $L_1$ and $L_2$ must remain within certain limits, e.g. 10.3±2% V. Since the conductors 2 - 4 may be several tens of meters long, a voltage drop occurs in them, so that the voltage has to be regulated. The regulation of the voltage is based on a measurement of the voltages in the conductors 2 - 4. The first conductor 2 is connected to one terminal of both filaments $L_1$ and $L_2$, the second conductor 3 to the other terminal of the first filament $L_1$ and the third conductor 4 to the other terminal of the second filament $L_2$.

The microprocessor 5 measures the voltage $U_B$ of the first conductor, the voltage $U_{PL}$ of the second conductor and the voltage $U_{VL}$ of the third conductor at the end connected to the regulator unit 1 at a moment when the first filament $L_1$ is illumined and the second filament $L_2$ extinguished. This is the situation prevailing in Fig. 2. The voltage across the first filament $L_1$ is $U_L$. The conductors have equal resistances $R_1$, $R_2$ and $R_3$. Therefore, equal voltage drops $U_R$ occur in the resistances $R_1$ and $R_2$. Since the second filament $L_2$ is not illumined, no current is flowing in this branch. Thus, the voltage $U_{VL}$ in the third conductor is equal to the voltage at that terminal of the first filament $L_1$ which is connected to the first conductor 2. Consequently, the voltages are related as expressed by the following equations:

$$U_L = U_B - U_{PL} - 2U_R \qquad (1)$$

$$U_R = U_B - U_{VL} \qquad (2)$$

From equations (1) and (2), the voltage $U_L$ between the terminals of the first filament $L_1$ amounts to

$$U_L = 2U_{VL} - (U_B + U_{PL}) \qquad (3)$$

In this manner, the effect of the voltage drops occurring in the conductors can be compensated and the terminal voltage of the first filament $L_1$ can be determined on the basis of the voltages $U_B$, $U_{VL}$ and $U_{PL}$, measured by the microprocessor 5, in the three conductors.

Fig. 3 shows voltage pulses representing the d.c. voltage supplied to the lamp. As shown, the voltage value is measured at the midpoint of the voltage pulse as indicated by the arrow at the middle the first pulse. On the basis of the measurement, the voltage $U_L$ across the first filament $L_1$ when it is illumined is obtained as expressed by equation (3). When the cycle time is $t_0$ and the desired r.m.s. voltage value is $U_0$, the terminal voltage $U_L$ of the first filament $L_1$ can be adjusted by calculating the duration t of the next pulse:

$$t = (U_{02}/U_{L2})t_0 \qquad (4)$$

The pulse length values t thus calculated can be stored in the memory of the microprocessor 5. In the event of failure of the first filament $L_1$, this makes it possible to maintain the voltage across the second filament $L_2$ at the desired level by having the pulse length for a given voltage determined by the pulse length value stored in memory, which was originally calculated from the measurement results for the first filament, and by driving the second transistor $Q_2$, which is connected in series with the second filament. The condition of the first filament $L_1$ is checked from time to time by measuring the voltage $U_{PL}$ at a point between the first filament $L_1$ and the first transistor $Q_1$. When the first filament $L_1$ is broken, no voltage is present at the measuring point when transistor $Q_1$ conducts. In this situation, the microprocessor 5 will start driving the second transistor $Q_2$, which is connected in series with the second filament $L_2$.

It is obvious to a person skilled in the art that different embodiments of the invention are not restricted to the example described above, but that they may instead be varied within the scope of the following claims.

## Claims

1. Procedure for regulating the voltage in a <u>two-filament</u> flasher, characterized in that, for voltage regulation, the voltage ($U_L$) between the terminals of the first filament ($L_1$) of the flasher is determined by the aid of three conductors (2-4), the first (2) of which is connected to one terminal of the first and second filaments ($L_1$,$L_2$), the second (3) to the other terminal of the first filament ($L_1$) and the third (4) to the other terminal of the second filament ($L_2$), and that, whilst the first filament ($L_1$) is illuminated and the second filament ($L_2$) is extinguished, the voltage between the terminals of the first filament L1 is determined by measuring the voltage ($U_B$,$U_{PL}$,$U_{VL}$) of each of the three conductors (2-4) at or near the remote end as seen from the filaments ($L_1$,$L_2$) and then deducting from the voltage (UVL) of the third conductor (4) the sum of the voltages of the other two conductors.

2. Procedure according to claim 1, characterized in that after the voltage ($U_L$) across the first filament ($L_1$) has been determined, said voltage value or a quantity deduced from it is stored in memory.

3. Procedure according to any one of the claims 1 - 2, characterized in that the filament ($L_1$) is supervised by measuring the voltage ($U_{PL}$) at at least one of its terminals.

4. Apparatus designed for implementing the procedure of claim 1 for regulating the voltage in a two-filament flasher, characterized in that, to regulate the voltage in the flasher, the apparatus contains a microprocessor (5) which determines the voltage between the terminals of the first filament ($L_1$) by the aid of three conductors (2-4), the first one (2) of which is connected to one terminal of the first and second filaments ($L_1$,$L_2$), the second one (3) to the other terminal of the first filament ($L_1$) and the third one (4) to the other terminal of the second filament ($L_2$), and that, whilst the first filament ($L_1$) is illuminated and the second filament ($L_2$) is extinguished, the microprocessor (5) determines the voltage ($U_L$) between the terminals of the first filament ($L_1$) by measuring the voltage ($U_B$,$U_{PL}$,$U_{VL}$) of each of the three conductors (2-4) at or near the remote end as seen from the filaments ($L_1$,$L_2$) and then deducting from the voltage ($U_{VL}$) of the third conductor (4) the sum of the voltages of the other two conductors.

5. Apparatus according to claim 4, characterized in that after determining the voltage ($U_L$) across the first filament ($L_1$), the microprocessor (5) stores said voltage value or a quantity deduced from it in memory.

6. Apparatus according to claim 4 or 5, characterized in that the microprocessor (5) supervises the filament ($L_1$) by monitoring the voltage ($U_{PL}$) at at least one of its terminals.

**Patentansprüche**

1. Verfahren zum Regeln der Spannung in einer Zweifaden-Blitzlichtquelle, dadurch gekennzeichnet, daß die Spannung ($U_L$) zwischen den beiden Klemmen des ersten Fadens ($L_1$) der Blitzlichtquelle zur Spannungsregulierung mit Hilfe dreier Leiter (2-4) bestimmt wird, deren erster (2) an die eine Klemme des ersten und des zweiten Fadens ($L_1$, $L_2$) angeschlossen ist, deren zweiter (3) an die andere Klemme des ersten Fadens ($L_1$), und deren dritter (4) an die andere Klemme des zweiten Fadens ($L_2$) angeschlossen sind, und daμ - während der erste Faden ($L_1$) leuchtet, und der zweite Faden ($L_2$) ausgeschaltet ist -, die Spannung zwischen den Klemmen des ersten Fadens ($L_1$) bestimmt wird durch Messen der Spannung ($U_B$, $U_{PL}$, $U_{VL}$) eines jeden der drei Leiter (2-4) am entfernten Ende oder nahe bei dem entfernten Ende von den Fäden ($L_1$, $L_2$) gemessen, und sodann von der Spannung ($U_{VL}$) des dritten Leiters (4) die Summe der Spannungen der beiden anderen Leiter abgezogen wird.

2. Verfahren nach Anspruch 1, dadurch gekennzeichnet, daß nach dem Ermitteln der Spannung ($U_L$) über den ersten Faden ($L_1$) der genannte Spannungswert oder ein hieraus abgeleitetes Maß im Speicher abgespeichert wird.

3. Verfahren nach einem der Ansprüche 1-2, dadurch gekennzeichnet, daß der Faden ($L_1$) dadurch überwacht wird, daß die Spannung ($U_{PL}$) an wenigstens einer seiner Klemmen überwacht wird.

4. Apparat zum Durchführen des Verfahrens gemäß Anspruch 1 zum Regeln der Spannung in einer Zweifaden-Blitzlichtquelle, dadurch gekennzeichnet, daß der Apparat zum Regeln der Spannung in der Blitzlichtquelle einen Mikroprozessor (5) aufweist, der die Spannung zwischen den Klemmen des ersten Fadens ($L_1$) mittels dreier Leiter (2-4) bestimmt, deren erster (2) an eine Klemme des ersten und des zweiten Fadens ($L_1$, $L_2$), deren zweiter (3) an die andere Klemme des ersten Fadens ($L_1$), und deren dritter (4) an die andere Klemme des zweiten Fadens ($L_2$) angeschlossen sind, und daß - während der erste Faden ($L_1$) glüht, und der zweite Faden ($L_2$) ausgelöscht ist - der Mikroprozessor (5) die Spannung ($U_L$) zwischen den Klemmen des ersten Fadens ($L_1$) ermittelt durch Messen der Spannung ($U_B$, $U_{PL}$, $U_{VL}$) eines jeden der drei Leiter (2-4) am entfernten Ende oder nahe bei dem entfernten Ende, von den Fäden ($L_1$, $L_2$) aus gesehen, mißt, und sodann von der Spannung ($U_{VL}$) des dritten Leiters (4) die Summe der Spannung der beiden anderen Leiter abzieht.

**5.** Apparat nach Anpruch 4, dadurch gekennzeichnet, daß nach dem Bestimmen der Spannung ($U_L$) über den ersten Faden ($L_1$) der Mikroprozessor (5) die Spannung oder einen hieraus abgeleiteten Wert im Speicher abspeichert.

**6.** Apparat nach Anspruch 4 oder 5, dadurch gekennzeichnet, daß der Mikroprozessor (5) den Faden ($L_1$) durch Überwachen der Spannung ($U_{PL}$) an wenigstens einem seiner Klemmen überwacht.

## Revendications

**1.** Procédé de régulation de la tension dans un clignotant à deux filaments, caractérisé en ce que, pour la régulation de la tension, la tension ($U_L$) entre les bornes du premier filament ($L_1$) du clignotant est déterminée à l'aide de trois conducteurs (2-4), dont le premier (2) est connecté a une borne du premier et du deuxième filaments ($L_1$, $L_2$), le deuxième (3) à l'autre borne du premier filament ($L_1$) et le troisième (4) à l'autre borne du deuxième filament ($L_2$), et en ce que, tandis que le premier filament ($L_1$) est allumé et que le deuxième filament ($L_2$) est éteint, la tension entre les bornes du premier filament $L_1$ est déterminée en mesurant la tension ($U_B$, $U_{PL}$, $U_{VL}$) de chacun des trois conducteurs (2-4) au niveau ou à proximité de l'extrémité éloignée par rapport aux filaments ($L_1$, $L_2$) puis en déduisant de la tension ($U_{VL}$) du troisième conducteur (4) la somme des tensions des deux autres conducteurs.

**2.** Procédé selon revendication 1, caractérisé en ce que, après que la tension ($U_L$) aux bornes du premier filament ($L_1$) a été déterminée, ladite valeur de tension ou une quantité qui en est déduite est mise en mémoire.

**3.** Procédé selon l'une quelconque des revendications 1 ou 2, caractérisé en ce que le filament ($L_1$) est supervisé par la mesure de la tension ($U_{PL}$) à au moins une de ses bornes.

**4.** Appareil conçu pour la mise en oeuvre du procédé de la revendication 1 pour assurer la régulation de la tension dans un clignotant à deux filaments, caractérisé en ce que, pour assurer la régulation de la tension dans le clignotant, l'appareil contient un microprocesseur (5) qui détermine la tension entre les bornes du premier filament ($L_1$) à l'aide de trois conducteurs (2-4), dont le premier (2) est connecté à une borne des premier et deuxième filaments ($L_1$, $L_2$), le deuxième (3) à l'autre borne du premier filament ($L_1$) et le troisième (4) à l'autre borne du deuxième filament ($L_2$), et en ce que, tandis que le premier filament ($L1$) est allumé et que le deuxième filament ($L_2$) est éteint, le microprocesseur (5) détermine la tension ($U_L$) entre les bornes du premier filament ($L_1$) en mesurant la tension ($U_B$, $U_{PL}$, $U_{VL}$) de chacun des trois conducteurs (2-4) au niveau ou à proximité de l'extrémité éloignée par rapport aux filaments ($L_1$, $L_2$) puis en déduisant de la tension ($U_{VL}$) du troisième conducteur (4) la somme des tensions des deux autres conducteurs.

**5.** Appareil selon revendication 4, caractérisé en ce que, après avoir déterminé la tension ($U_L$) aux bornes du premier filament ($L_1$), le microprocesseur (5) mémorise ladite valeur de tension ou une quantité qui en est déduite.

**6.** Appareil selon revendication 4 ou 5, caractérisé en ce que le microprocesseur (5) supervise le filament ($L_1$) en contrôlant la tension ($U_{PL}$) à au moins une de ses bornes.

Fig.1

Fig. 2

Fig.3